# EUROPEAN PATENT APPLICATION

(11) **EP 4 826 857 A1**
(43) Date of publication of application: **21.10.2026**
(21) Application number: 25171307.9
(22) Date of filing: 17.04.2025
(51) Int. Cl.: H01M 50/10

(54) **HYDROLYTICALLY STABLE POLYCARBONATE COMPOSITE COMPOSITION AND METHOD OF MANUFACTURE AND USE THEREOF**

(71) Applicant: Trinseo Europe GmbH, 8808 Pfaeffikon (CH)
(72) Inventor: CHUNG, Luke, 8808 Pfaeffikon (CH); VREYS, Mark, 8808 Pfaeffikon (CH)
(74) Representative: SSM Sandmair

(57) **Abstract**

Embodiments relate to hydrolytically stable, flame retardant compositions including a polycarbonate (PC) polymer, phosphorus-based flame retardant, one or more reinforcing fibers, and between 0.1-1.0% by weight of a polycarbodiimide. Also provided is a method of preparing the composition, use of the compositions, articles of manufacture including the compositions, and methods of increasing flame retardancy of articles.

## Description

### FIELD OF THE INVENTION

Embodiments generally relate to hydrolytically stable polycarbonate (PC) compositions and methods of manufacture and use thereof.

### BACKGROUND OF THE INVENTION

Phosphate based flame retardants are generally effective additives for glass filled PC composites, as they may increase flow and/or retain fiber length of the composites. However, phosphate containing composites are not hydrolytically stable over time with elevated temperatures and high humidity. The hydrolysis by-products of phosphate based flame retardant may deteriorate the PC macromolecule and have a negative impact on composite performance. Thus, there exists a need for glass (or other fiber) filled, flame retardant PC composites with improved hydrolytic stability.

### SUMMARY OF THE INVENTION

Embodiments relate to hydrolytically stable, flame retardant polycarbonate-containing compositions including a PC polymer, a phosphorus-based flame retardant, a reinforcing fiber, and a polycarbodiimide. The compositions may also include one or more impact modifiers. The compositions may also include one or more styrene polymers. The compositions may also include one or more fluoropolymers. The compositions may further include a hydrolytically stable phenolic antioxidant, such as octadecyl 3-(3,5-di-tert-butyl-4-hydroxyphenyl)propionate. The compositions may further include one or more of pentaerythritol and 2-octyldodecylstearat.

Embodiments further relate to a method of preparing hydrolytically stable, flame retardant compositions described in this disclosure. Methods may include providing a PC polymer, a phosphorus-based flame retardant, and a polycarbodiimide, where the method may further include mixing a PC polymer, a phosphorus-based flame retardant, and a polycarbodiimide at a first extruder to produce an extruded melt. The method may further include providing a reinforcing fiber to the extruded melt, at a second extruder, to produce a final extrudate. The method may further include dividing the final extrudate into a desired dimension or weight to produce the hydrolytically stable, flame retardant composition.

Embodiments further relate to use of hydrolytically stable, flame retardant compositions described in this disclosure. Compositions may be used in, without limitation, electric vehicle (EV) battery enclosures and components.

Embodiments further relate to articles of manufacture including hydrolytically stable, flame retardant compositions described in this disclosure.

Embodiments further relate to a method of increasing the flame retardancy of articles of manufacture including hydrolytically stable, flame retardant compositions described in this disclosure.

In one exemplary embodiment, a composition includes a polycarbonate polymer; a phosphorus-based flame retardant; one or more reinforcing fibers; and 0.01-1% by weight of a polycarbodiimide.

In some embodiments, the composition includes 0.1- 0.5% by weight of the polycarbodiimide.

In some embodiments, the polycarbodiimide is selected from the group consisting of poly(cyclooctylene carbodiimide), poly(1,4-dimethylene cyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6', tetra-isopropyl-diphenylene carbodiimide), poly(2,4,6-triisopropyl-1,3 -phenylene carbodiimide), poly(1,3,5-triisopropyl-phenylene-2,4-carbodiimide), poly(2,6 diisopropyl-1,3- phenylene carbodiimide), poly(tolyl carbodiimide), poly(4,4'-diphenylmethane carbodiimide), poly(3,3'-dimethyl-4,4'-biphenylene carbodiimide), poly(p- phenylene carbodiimide), poly(m-phenylene carbodiimide), poly(3,3'-dimethyl-4,4'- diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and mixtures thereof.

In some embodiments, the composition includes 15-80% by weight of the polycarbonate polymer.

In some embodiments, the polycarbonate polymer includes a recycled polycarbonate.

In some embodiments, the composition includes 2-15% by weight of the phosphorus-based flame retardant.

In some embodiments, the phosphorus-based flame retardant is selected from the group consisting of an oligomeric phosphate, a poly(block-phosphonato-ester), a poly(block-phosphonato-carbonate), a phosphazene, a phenoxyphosphazene, a polyphosphazene, and mixtures thereof.

In some embodiments, the oligomeric phosphate is selected from the group consisting of bisphenol A bis(diphenyl phosphate), resorcinol bis(2,6-dixylenyl phosphate), 1,3-phenylene tetrakis(2,6-dimethylphenyl) ester, and mixtures thereof.

In some embodiments, the composition includes 2-70% by weight of one or more reinforcing fibers.

In some embodiments, the one or more reinforcing fibers are selected from the group consisting of glass fiber, carbon fiber, steel fiber, aluminum fiber, magnesium fiber, nickel fiber, nickel-coated carbon fiber, nickel-coated basalt fiber, polyacrylonitrile fiber, polyaramid fiber, natural cellulose fiber, mineral fiber, and mixtures thereof.

In some embodiments, the one or more reinforcing fibers include glass fiber.

In some embodiments, the composition further includes no greater than 5% by weight of an impact modifier.

In some embodiments, the impact modifier is selected from the group consisting of butadiene rubber-based methyl methacrylate styrene, styrene-butadiene rubber-based methyl methacrylate styrene, methyl methacrylate-grafted, siloxane-acrylate rubber, acrylate rubber-based, and mixtures thereof.

In some embodiments, the impact modifier is a core-shell impact modifier.

In some embodiments, the composition further includes no greater than 20% by weight of a second polymer.

In some embodiments, the second polymer is selected from the group consisting of acrylonitrile butadiene styrene (ABS), styrene acrylonitrile (SAN), and mixtures thereof.

In some embodiments, the composition further includes no greater than 0.8% by weight of polytetrafluoroethylene.

In some embodiments, the composition further includes no greater than 0.2% by weight of octadecyl 3-(3,5-di-tert-butyl-4-hydroxyphenyl)propionate.

In some embodiments, the composition further includes no greater than 0.6% by weight of pentaerythritol and/or 2-octyldodecylstearat.

In some embodiments, the composition has a flexural strength loss at 1000 hours of aging in an 85°C/85% relative humidity climate chamber of less than 30%.

In another exemplary embodiment, a method of forming the composition includes a step of performing at least one of fiber-reinforced thermoplastic direct molding, fiber-reinforced thermoplastic granulation, fiber reinforced sheet extrusion, organosheet lamination, or unidirectional tape pultrusion and lamination.

In another exemplary embodiment, an article of manufacture includes the composition.

In another exemplary embodiment, an electric vehicle (EV) battery enclosure includes the composition.

These and other aspects and features of nonlimiting embodiments of the present invention will become apparent to those skilled in the art upon review of the following description of specific nonlimiting embodiments of the invention.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings.

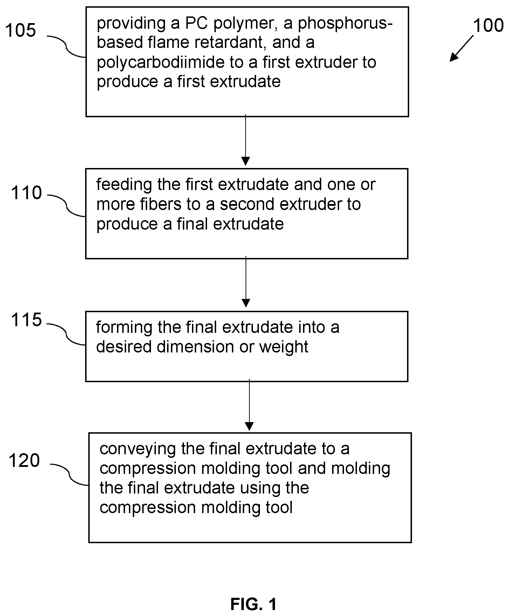

FIG. 1 depicts an exemplary flow diagram describing a method of preparing a hydrolytically stable, polycarbonate-containing composition.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION OF THE INVENTION

The following description is of exemplary embodiments of polycarbonate-containing compositions, methods of preparing polycarbonate-containing compositions, and methods of using polycarbonate-containing compositions and articles of manufacture made therefrom that are presently contemplated for carrying out the present invention. This description is not to be taken in a limiting sense but is made merely for the purpose of describing the general principles and features of various aspects of the present invention. The scope of the present invention is not limited by this description.

Unless defined otherwise, all technical and scientific terms used herein have the same meanings as commonly understood by one of ordinary skill in the art to which this invention belongs. Specific methods, devices, and materials may be described, although any methods and materials similar or equivalent to those described herein can be used in the practice or testing of the present invention.

It should be appreciated that the words "first," "second," and so on, in the description and claims, are used to distinguish or identify, and not to show a serial or numerical limitation.

Throughout the description and claims, the terms "comprise," "including," "having," "contain," and their variations should be understood as meaning "including but not limited to" and are not intended to exclude other components unless specifically so stated.

While the invention has been described in connection with what is presently considered to be the most practical and embodiments thereof are further described in the examples below, it is to be understood that the invention is not to be limited to the disclosed embodiments but is intended to cover various modifications and equivalent arrangements included within the spirit and scope of the appended claims.

The following description sets forth various examples along with specific details to provide a thorough understanding of claimed subject matter. It will be understood by those skilled in the art, however, that claimed subject matter may be practiced without one or more of the specific details disclosed herein. Further, in some circumstances, well-known methods, procedures, systems, and/or components have not been described in detail in order to avoid unnecessarily obscuring claimed subject matter.

Embodiments generally relate to hydrolytically stable, flame retardant polycarbonate-containing compositions. In particular, the compositions are hydrolytically stable over time in the presence of elevated temperatures and high humidity. While hydrolysis by-products my deteriorate polycarbonate (PC) macromolecules in existing compositions and have a negative impact on their performance, embodiments described herein may maintain their flexural strength after aging.

As used herein the term "hydrolytically stable composition" may refer to a composition that is at least partially resistant against hydrolysis. As used herein, "hydrolysis" may refer to a chemical reaction between one or more chemical species and water. In some cases, hydrolysis of a compound, composition, or material may lead to one or more undesired byproducts being formed and/or cause damage to the structural integrity of the compound, composition, or material, consistent with details described elsewhere in this disclosure.

In some embodiments, a hydrolytically stable composition may retain a portion of its original flexural strength after aging for an extended period of time, as described in further detail below in this disclosure. For example, a hydrolytically stable composition may retain at least 70%, such as at least 80%, such as at least 85%, such as at least 90%, such as at least 95%, such as at least 99%, etc., of its original flexural strength after 1,000 hours of aging in a climate oven held at 85 °C and 85% relative humidity (RH).

### Polycarbonate Polymer

The composition may include a PC polymer. As used herein, the terms "polycarbonate" or "PC" may refer to a thermoplastic polymer containing carbonate groups in its chemical structure. It is a type of durable, often optically transparent material with a high impact resistance. A common type of PC is derived from bisphenol A (BPA), with carbonate groups connected between the aromatic rings thereof to form a polymer chain with repeating bisphenol A - carbonate units. PC may be produced via a condensation reaction between BPA and phosgene (COCl₂). The terms "PC" and "PC polymer" may be used interchangeably herein.

In some cases, a PC may be produced via a condensation reaction between BPA and phosgene (COCl₂). In some cases, a PC may be prepared from BPA and carbon monoxide. In some cases, a PC may be prepared using a transesterification reaction between BPA and a dialkyl carbonate (e.g., a dimethyl carbonate) to produce a bisphenol-A bisalkylcarbonate, followed by a melt-polycondensation of the bisphenol-A bisalkylcarbonate. In some cases, a PC may be prepared without using a catalyst. In some cases, a PC may be prepared using a solid-state synthesis. In some cases, a PC may be prepared using a catalyst, such as without limitation a homogeneous catalyst and/or an organometallic catalyst.

Additionally, and/or alternatively, in some cases, a PC polymer may be prepared using a BPA derivative, such as without limitation tetrabromobisphenol A (TBBPA), tetrabromobisphenol A bis(2,3-dibromopropyl) ether (TBBPA-DBPE), bisphenol A diphenyl phosphate (BADP), and/or the like. Such PC may be used as flame retardant or flame-retarding additives, consistent with details described elsewhere in this disclosure.

Additionally, and/or alternatively, in some cases, a PC polymer may include a BPA-free PC, such as without limitation a PC prepared using tetramethylcyclobutanediol as a monomer. Additionally, and/or alternatively, in some cases, a PC polymer may be prepared using a BPA analogue, such as without limitation 4,4'-dihydroxydiphenylmethane, which is also known as bisphenol F or BFF.

Additionally, and/or alternatively, in some cases, a PC polymer may include a CO₂-based polycarbonate, such as without limitation a CO₂-based polycarbonate prepared from CO₂ and epoxides, using a ring-opening polymerization reaction. Additionally, and/or alternatively, in some cases, a PC polymer may include a PC polymer prepared from a single carbonate monomer, such as without limitation via a ring-opening reaction. Additionally, and/or alternatively, in some cases, a PC polymer may include a linear and/or aliphatic polycarbonate, such as without limitation a PC synthesized using a dialkylcarbonate and a linear alkane diol. Additionally, and/or alternatively, in some cases, a PC polymer may include a bio-based PC polymer, such as without limitation a bio-based poly(limonene carbonate.

In some embodiments, the composition may include at least 15% by weight and no greater than 80% by weight of a PC polymer. In some preferred embodiments, the composition may include at least 20% by weight and no greater than 78% by weight of a PC polymer.

As nonlimiting examples, the composition may include at least 15% by weight, at least 20% by weight, at least 25% by weight, at least 30% by weight, at least 35% by weight, at least 40% by weight, at least 45% by weight, at least 50% by weight, at least 55% by weight, at least 60% by weight, at least 65% by weight, at least 70% by weight, at least 75% by weight and/or the like, of a PC polymer. As further nonlimiting examples, the composition may include no greater than 80% by weight, no greater than 78% by weight, no greater than 75% by weight, no greater than 70% by weight, no greater than 65% by weight, no greater than 60% by weight, no greater than 55% by weight, no greater than 50% by weight, no greater than 45% by weight, no greater than 40% by weight, no greater than 35% by weight, no greater than 30% by weight, no greater than 25% by weight, no greater than 20% by weight, and/or the like, of a PC polymer.

In some embodiments, the PC polymer may include only virgin PC. As used herein, the term "virgin" PC may refer to a PC that is completely new and has never been used or processed before. Virgin PC may be made directly from a raw material or materials, such as without limitation crude oil or natural gas, with no recycled components added. In some embodiments, the PC polymer may include a recycled PC.

In some embodiments, the PC polymer may include only recycled PC. As used herein, a "recycled" PC is a type of PC material that was produced in another manufacturing context and/or previously used for a different use case or purpose. PC is a recyclable material under recycling code 7. Recycled PC may contain additives, fillers, scraps, waste, contaminants, impurities, and/or the like.

In some embodiments, the PC polymer may include both virgin PC and recycled PC. The percentage of recycled PC that may be tolerated for producing the composition described herein may depend on certain manufacturing limitations and quality control metrics. As nonlimiting examples, the PC polymer may include at least 5% by weight, at least 10% by weight, at least 15% by weight, at least 20% by weight, at least 25% by weight, at least 30% by weight, and/or the like, of recycled PC. As further nonlimiting examples, the PC polymer may include at most 5% by weight, at most 10% by weight, at most 15% by weight, at most 20% by weight, at most 25% by weight, at most 30% by weight, at most 35% by weight, at most 40% by weight, at most 45% by weight, and/or the like, of recycled PC.

In some embodiments, the composition may include PC as one or more copolymers. As used herein, the term "copolymer" may refer to a polymer derived from more than one type of monomers. Depending on the types of monomers involved, a copolymer may include a bipolymer (e.g., with two types of monomers), a terpolymer (e.g., with three types of monomers), a quaterpolymer (e.g., with four types of monomers), and/or the like. A copolymer may contain a specific ratio between different monomers, such as without limitation a 20:80 ratio for a bipolymer, a 10:80:10 ratio for a terpolymer, and/or the like. Additionally, depending on the type of copolymerization being used, a copolymer may accordingly be categorized as an alternating copolymer, a random copolymer, a block copolymer, a stereoblock copolymer, a periodic copolymer, a gradient copolymer, a graft copolymer, a brush copolymer, a star copolymer, and/or the like.

As nonlimiting examples, the composition may include a PC-polyester copolymer, such as a PC-polyethylene terephthalate (PET) copolymer, a PC-polybutylene terephthalate (PBT) copolymer, and/or the like. As a further nonlimiting example, the composition may include a PC-acrylonitrile butadiene styrene (ABS) copolymer. As a further nonlimiting example, the composition may include a PC-poly(methyl methacrylate) (PMMA) copolymer. As a further nonlimiting example, the composition may include a PC-siloxane copolymer. As a further nonlimiting example, the composition may include a PC-polyphosphonate copolymer. As a further nonlimiting example, the composition may include a PC-styrene copolymer, a PC-styrene acrylonitrile resin (SAN) copolymer, and/or the like.

In some embodiments, the composition may include PC as one or more polymer blends. As used herein, the term "polymer blend" may refer to a homogeneous mixture of two or more polymers. Unlike a copolymer that includes two or more types of monomers covalently linked to one another, a polymer blend is a physical mixture of polymers held together by intermolecular forces, without chemical bonds linking therebetween.

As nonlimiting examples, the composition may include a PC-polyester polymer blend, such as a PC- PET polymer blend, a PC-PBT polymer blend, and/or the like. As a further nonlimiting example, the composition may include a PC-ABS polymer blend. As a further nonlimiting example, the composition may include a PC-PMMA polymer blend. As a further nonlimiting example, the composition may include a PC-siloxane polymer blend. As a further nonlimiting example, the composition may include a PC-polyphosphonate polymer blend. As a further nonlimiting example, the composition may include a PC-styrene polymer blend, a PC-styrene acrylonitrile resin (SAN) polymer blend, and/or the like.

### Phosphorus-based Flame Retardant

The composition may include a phosphorus-based flame retardant. As used herein, a "phosphorus-based flame retardant" may refer to a flame retardant that containing the element phosphorus in its composition or chemical formula. As used herein, a "flame retardant" is a chemical species, or a combination of chemical species, that is added to a material to make it less combustible.

In some embodiments, the phosphorus-based flame retardant may be selected from a phosphate-based flame retardant, a phosphazene-based flame retardant, and mixtures thereof.

In some embodiments, the phosphate-based flame retardant may be selected from the group consisting of an oligomeric phosphate, a poly(block-phosphonato-ester), a poly(block-phosphonato-carbonate), 1,3-phenylene tetrakis(2,6-dimethylphenyl) ester, and mixtures thereof. Exemplary flame retardants are known in the art and are described in, for example, U.S. Pat. No. 7,645,850, the entire contents of which is incorporated herein by reference.

As used herein, an "oligomeric phosphate" is an organophosphate that contains multiple, but often a small number of, repeating units in its molecular structure. In some embodiments, the oligomeric phosphate may include bisphenol A bis(diphenyl phosphate). As used herein, "bisphenol A bis(diphenyl phosphate)" or "BAPP" is an organophosphate ester with a chemical formula of C₃₉H₃₄O₈P₂. In some cases, BAPP may be referred to as BDP or BRADP. In some embodiments, bisphenol A bis(diphenyl phosphate) may include a derivative of BAPP, such as without limitation an oligomeric derivative of BAPP.

In some embodiments, the phosphorus-based flame retardant may include a poly(block-phosphonato-ester). In some embodiments, the phosphorus-based flame retardant may include a poly(block-phosphonato-carbonate).

In some embodiments, the phosphorus-based flame retardant may include 1,3-phenylene tetrakis(2,6-dimethylphenyl) ester. As used herein, "1,3-phenylene tetrakis(2,6-dimethylphenyl) ester" is an organophosphate ester with a chemical formula of C₃₈H₄₀O₈P₂. In some cases, 1,3-phenylene tetrakis(2,6-dimethylphenyl) ester may be referred to as resorcinol bis(2.6-dixylenyl phosphate) or RDX. RDX is a type of flame retardant for various engineering plastics and synthetic fibers. It is available from Daihachi Chemical under the brand name PX-200. Accordingly, in some embodiments, the organic phosphorus-containing flame retardant may include c.

In some embodiments, the composition may include at least 2% by weight and no greater than 15% by weight of a phosphorus-based flame retardant. In some embodiments, the composition may include at least 2% by weight and no greater than 10% by weight of a phosphorus-based flame retardant. In some embodiments, the composition may include at least 2% by weight and no greater than 5% by weight of an organic phosphorus-containing flame retardant.

As nonlimiting examples, the composition may include at least 2% by weight, at least 3% by weight, at least 4% by weight, at least 5% by weight, at least 6% by weight, at least 8% by weight, at least 10% by weight, at least 12% by weight, at least 15% by weight, and/or the like, of a phosphorus-based flame retardant. As further nonlimiting examples, the composition may include no greater than 15% by weight, no greater than 12% by weight, no greater than 10% by weight, no greater than 8% by weight, no greater than 6% by weight, no greater than 5% by weight, no greater than 4% by weight, no greater than 3% by weight, and/or the like, of a phosphorus-based flame retardant.

### Reinforcing Fiber

The composition may include one or more reinforcing fibers. As used herein, the term "reinforcing fiber" may refer to a material of an elongated shape that, once integrated into a material, may improve the mechanical properties of the material. A reinforcing fiber may include any type of fiber material seemed suitable or relevant by a person of ordinary skill in the art, upon reviewing the entirety of this disclosure.

In some embodiments, the one or more reinforcing fibers may include one or more selected from a group consisting of glass fiber, carbon fiber (e.g., without limitation recycled carbon fiber), steel fiber, aluminum fiber (e.g., without limitation, aluminum alloy fiber), magnesium fiber (e.g., without limitation, magnesium alloy fiber), nickel fiber (e.g., without limitation, nickel alloy fiber), nickel-coated carbon fiber, nickel-coated basalt fiber, polyacrylonitrile fiber (e.g., without limitation, pre-oxidized polyacrylonitrile fiber), polyaramid fiber, natural cellulose fiber (e.g., without limitation, flax fiber), mineral fiber (e.g., without limitation, wollastonite fiber), and mixtures thereof.

In some embodiments, the composition may include from 20 to 70% by weight of one or more reinforcing fibers. As nonlimiting examples, the composition may include at least 25% by weight, at least 30% by weight, at least 35% by weight, at least 40% by weight, at least 45% by weight, at least 50% by weight, at least 55% by weight, at least 60% by weight, at least 65% by weight, and/or the like, of one or more reinforcing fibers. As further nonlimiting examples, the composition may include no greater than no greater than 65% by weight, no greater than 60% by weight, no greater than 55% by weight, no greater than 50% by weight, no greater than 45% by weight, no greater than 40% by weight, no greater than 35% by weight, no greater than 30% by weight, no greater than 25% by weight, and/or the like, of one or more reinforcing fibers.

### Polycarbodiimide

The composition may include a polycarbodiimide. As used herein, the term "polycarbodiimide" may refer to a thermoplastic polymer characterized by the presence of repeating carbodiimide (-N=C=N-) functional groups within its chemical structure.

In some embodiments, the composition may include at least 0.01% by weight and no greater than 1.0% by weight of a polycarbodiimide. In some preferred embodiments, the composition may include at least 0.1% by weight and no greater than 0.5% by weight of a polycarbodiimide.

In some embodiments, the polycarbodiimide may be selected from the group consisting of poly(cyclooctylene carbodiimide), poly(1,4-dimethylene cyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6', tetra-isopropyl-diphenylene carbodiimide), poly(2,4,6-triisopropyl-1,3 -phenylene carbodiimide), poly(1,3,5-triisopropyl-phenylene-2,4-carbodiimide), poly(2,6 diisopropyl-1,3- phenylene carbodiimide), poly(tolyl carbodiimide), poly(4,4'-diphenylmethane carbodiimide), poly(3,3'-dimethyl-4,4'-biphenylene carbodiimide), poly(p- phenylene carbodiimide), poly(m-phenylene carbodiimide), poly(3,3'-dimethyl-4,4'- diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and mixtures thereof.

In some embodiments, the composition may include polycarbodiimide as one or more copolymers. As nonlimiting examples, the composition may include a PC- polyvalent isocyanate copolymer, wherein the polyvalent isocyanate copolymer may be selected from the group consisting of hexamethylene diisocyanate, xylene diisocyanate, cyclohexane diisocyanate, pyridine diisocyanate, 2,4-tolylene diisocyanate, 2,6-tolylene diisocyanate, 4,4-diphenylmethane diisocyanate, p- Examples include phenylene diisocyanate, m-phenylene diisocyanate, and 1,5-naphthylene diisocyanate.

As nonlimiting examples, the composition may include at least 0.01% by weight, at least 0.05% by weight, at least 0.1% by weight, at least 0.2% by weight, at least 0.3% by weight, at least 0.4% by weight, at least 0.5% by weight, at least 0.6% by weight, at least 0.7% by weight, at least 0.8% by weight, at least 0.9% by weight, and/or the like, of a polycarbodiimide. As further nonlimiting examples, the composition may include no greater than 0.9% by weight, no greater than 0.8% by weight, no greater than 0.7% by weight, no greater than 0.6% by weight, no greater than 0.5% by weight, no greater than 0.4% by weight, no greater than 0.3% by weight, no greater than 0.2% by weight, no greater than 0.1% by weight, no greater than 0.05% by weight, no greater than 0.01% by weight, and/or the like, of a polycarbodiimide.

### Impact modifiers

The composition may include one or more impact modifiers. As used herein, an "impact modifier" may refer to an additive mixed into a resin to significantly improve its resistance to impact, making the material tougher and less prone to cracking or breaking when struck or stressed. Essentially, an impact modifier enhances the durability of a material by absorbing the energy or shock of an impact through its elastomeric properties.

In some embodiments, the one or more impact modifiers may be selected from a group consisting of a butadiene rubber-based methyl methacrylate-styrene, a styrene-butadiene rubber-based methyl methacrylate-styrene, a methyl methacrylate-grafted impact modifier, a siloxane-acrylate rubber, and an acrylate rubber-based impact modifier, and mixtures thereof

In some embodiments, the one or more impact modifiers may include a butadiene rubber-based methyl methacrylate-styrene. In some embodiments, the one or more impact modifiers may include a styrene-butadiene rubber-based methyl methacrylate-styrene. In some embodiments, the one or more impact modifiers may include a methyl methacrylate-grafted impact modifier. In some embodiments, the one or more impact modifiers may include a siloxane-acrylate rubber. In some embodiments, the one or more impact modifiers may include an acrylate rubber-based impact modifier. A person of ordinary skill in the art, upon reviewing the entirety of this disclosure, will be able to identify suitable types of impact modifiers for the composition described in this disclosure.

In some embodiments, the more impact modifiers may include a core-shell structure. Exemplary types of impact modifiers with such a structure may include without limitation a methyl methacrylate-grafted impact modifier having a core-shell structure, a siloxane-acrylate rubber having a core shell structure, an acrylate rubber-based core-shell impact modifier, and/or the like. As used herein, a "core-shell" structure may refer to a material structure with a first material encapsulated by, and interfacing with, a second material, wherein the first material has a different composition from the second material. A core-shell structure may be adopted by either inorganic or organic materials, often in order to improve certain physical properties and/or chemical characteristics thereof, such as without limitation solubility and chemical stability. As a nonlimiting example, a material degradable by oxygen gas in the ambient environment may be encapsulated and protected by a chemically inert shell to improve its stability and extend its lifetime. Additionally, the interface between the two types of materials in a core-shell structure may be either noncontinuous (e.g., with a sharp change in chemical composition, dielectric constant, polarity, and/or the like) or continuous (e.g., with a smooth gradient in chemical composition, dielectric constant, polarity, and/or the like).

In some embodiments, the composition may include no greater than 5% by weight of one or more impact modifiers. In some embodiments, the composition may include from 0 to 5% by weight of one or more impact modifiers. In some embodiments, the composition may include from 0.5% to 4% by weight of one or more impact modifiers. As nonlimiting examples, the composition may include no greater than 4% by weight, no greater than 3% by weight, no greater than 2% by weight, no greater than 1% by weight, and/or the like, of one or more impact modifiers. As further nonlimiting examples, the composition may include at least 0.1% by weight, at least 0.3% by weight, at least 0.5% by weight, at least 1% by weight, and/or the like, of one or more impact modifiers. As further nonlimiting examples, the composition may include at least 0.1% by weight and no greater than 1% by weight, at least 1% by weight and no greater than 2% by weight, at least 2% by weight and no greater than 3% by weight, at least 3% by weight and no greater than 4% by weight, at least 4% by weight and no greater than 5% by weight, and/or the like, of one or more impact modifiers.

### Styrene Polymer

The composition may include one or more styrene polymers. In some embodiments, the polymer may be selected from a group consisting of acrylonitrile butadiene styrene (ABS), styrene acrylonitrile (SAN), and mixtures thereof

In some embodiments, the composition may include no greater than 20% by weight of one or more styrene polymers. In some embodiments, the composition may include from 0 to 20% by weight of one or more styrene polymers. As nonlimiting examples, the composition may include no greater than 15% by weight, no greater than 12% by weight, no greater than 10% by weight, no greater than 9% by weight, no greater than 8% by weight, no greater than 7% by weight, no greater than 6% by weight, no greater than 5% by weight, no greater than 4% by weight, no greater than 3% by weight, no greater than 2% by weight, no greater than 1% by weight, and/or the like, of one or more styrene polymers. As further nonlimiting examples, the composition may include at least 0.1% by weight, at least 0.3% by weight, at least 0.5% by weight, at least 1% by weight, at least 2% by weight, at least 3% by weight, at least 4% by weight, at least 5% by weight, at least 6% by weight, at least 7% by weight, at least 8% by weight, at least 9% by weight, at least 10% by weight, at least 12% by weight, at least 15% by weight and/or the like, of one or more styrene polymers. As further nonlimiting examples, *Fluoropolymer*

The composition may include one or more fluoropolymers. As used herein, a "fluoropolymer" is a class of polymer that contains one or more repeated C - F bonds in its chemical structure.

In some embodiments, a fluoropolymer may include polytetrafluoroethylene (PTFE). As used herein, "polytetrafluoroethylene" or "PTFE" is a chemically inert, synthetic fluoropolymer of tetrafluoroethylene. It is available from Chemours (originally DuPont) under the brand name Teflon. PTFE is a hydrophobic (and sometimes omniphobic) solid and a nonstick material that may be used as an additive in composite materials across various industries. Additionally, and/or alternatively, a fluoropolymer may include polyvinylidene fluoride (PVDF), polyvinyl fluoride (PVF), polychlorotrifluoroethylene (PCTFE), fluorinated ethylene-propylene (FEP), polyethylenetetrafluoroethylene (ETFE), polyethylenechlorotrifluoroethylene (ECTFE), perfluoroalkoxy polymer (PFA/MFA), perfluorinated elastomer (FFPM/FFKM), fluoroelastomer (FPM/FKM) including vinylidene fluoride-based copolymer, fluoroelastomer (FEPM) including tetrafluoroethylene-propylene, perfluoropolyether (PFPE), and/or the like.

In some embodiments, the composition may include no greater than 0.8% by weight of a fluoropolymer. In some embodiments, the composition may include from 0 to 0.8% by weight of a fluoropolymer. In some embodiments, the composition may include from 0.01% to 0.8% by weight of a fluoropolymer. As nonlimiting examples, the composition may include no greater than 0.7% by weight, no greater than 0.6% by weight, no greater than 0.5% by weight, no greater than 0.4% by weight, no greater than 0.3% by weight, no greater than 0.2% by weight, no greater than 0.1% by weight, no greater than 0.05% by weight, and/or the like, of a fluoropolymer. As further nonlimiting examples, the composition may include at least 0.05% by weight, at least 0.1% by weight, at least 0.2% weight, at least 0.3% weight, at least 0.4% weight, at least 0.5% weight, at least 0.6% weight, at least 0.7% weight, and/or the like, of a fluoropolymer. As further nonlimiting examples, the composition may include at least 0.01% by weight and no greater than 0.05% by weight, at least 0.05% by weight and no greater than 0.1% by weight, at least 0.1% by weight and no greater than 0.2% by weight, at least 0.2% by weight and no greater than 0.3% by weight, at least 0.3% by weight and no greater than 0.4% by weight, at least 0.4% by weight and no greater than 0.5% by weight, at least 0.5% by weight and no greater than 0.6% by weight, at least 0.6% by weight and no greater than 0.7% by weight, at least 0.7% by weight and no greater than 0.8% by weight, and/or the like, of a fluoropolymer.

### Hydrolytically Stable Phenolic Antioxidant

The composition may include a hydrolytically stable phenolic antioxidant. As used herein, a "hydrolytically stable" phenolic antioxidant may refer to a phenolic antioxidant that is at least partially resistant against hydrolysis. As used herein, a "phenolic antioxidant" may refer to an antioxidant that contains more or more phenolic moieties in its chemical structure. As used herein, a "phenolic moiety" may refer to a chemical structure or substructure with one or more hydroxyl groups covalently linked to an aromatic ring. Upon donating a hydrogen atom (i.e., a proton and an electron) to a free radical, a phenolic moiety becomes a resonance-stabilized and/or sterically hindered free-radical product with reduced reactivity compared to the original free radical reactant. As a result, a phenolic moiety may be used as an antioxidant to effectively neutralize a free radical and prevent it from causing further oxidative damage.

In some embodiments, a hydrolytically stable phenolic antioxidant may include octadecyl 3-(3,5-di-tert-butyl-4-hydroxyphenyl)propionate. As used herein, octadecyl 3-(3,5-di-tert-butyl-4-hydroxyphenyl)propionate is a propionate-based, sterically hindered phenolic antioxidant that functions as a polymeric stabilizer by its butylphenol moiety. It is a white solid with a chemical formula of C35H62O3 and available from BASF under the brand name BASF B900.

In some embodiments, the composition may include no greater than 0.2% by weight of a hydrolytically stable phenolic antioxidant. In some embodiments, the composition may include from 0 to 0.2% by weight of a hydrolytically stable phenolic antioxidant. In some embodiments, the composition may include from 0.05% to 0.2% by weight of a hydrolytically stable phenolic antioxidant. In some embodiments, the composition may include from 0.02% to 0.1% by weight of a hydrolytically stable phenolic antioxidant. As nonlimiting examples, the composition may include no greater than 0.18% by weight, no greater than 0.16% by weight, no greater than 0.14% by weight, no greater than 0.12% by weight, no greater than 0.1% by weight, no greater than 0.08% by weight, no greater than 0.06% by weight, no greater than 0.04% by weight, no greater than 0.02% by weight, and/or the like, of a hydrolytically stable phenolic antioxidant. As further nonlimiting examples, the composition may include at least 0.01% by weight, at least 0.02% by weight, at least 0.05% by weight, at least 0.1% by weight, and/or the like, of a hydrolytically stable phenolic antioxidant. As further nonlimiting examples, the composition may include at least 0.01% by weight and no greater than 0.05% by weight, at least 0.05% by weight and no greater than 0.1% by weight, at least 0.1% by weight and no greater than 0.15% by weight, at least 0.15% by weight and no greater than 0.2% by weight, and/or the like, of a hydrolytically stable phenolic antioxidant.

### Pentaerythritol

The composition may include pentaerythritol. As used herein, "pentaerythritol" may refer to an organic compound with a chemical formula of C₅H₁₂O₄ and a structural formula of C(CH₂OH)₄.

In some embodiments, the composition may include no greater than 0.6% by weight of pentaerythritol. In some embodiments, the composition may include from 0 to 0.6% by weight of pentaerythritol. In some embodiments, the composition may include from 0.1% by weight to 0.6% by weight of pentaerythritol. As nonlimiting examples, the composition may include no greater than 0.5% by weight, no greater than 0.4% by weight, no greater than 0.3% by weight, no greater than 0.2% by weight, no greater than 0.1% by weight, and/or the like, of penta erythritol. As further nonlimiting examples, the composition may include at least 0.01% by weight, at least 0.05% by weight, at least 0.1% by weight, at least 0.2% by weight, and/or the like, of pentaerythritol.

### 2-Ocyldodecylstearat

The composition may include 2-octlydodecylstearat, which may serve as a mold release agent. In some embodiments, the composition may include no greater than 0.6% by weight of 2-octlydodecylstearat. In some embodiments, the composition may include from 0 to 0.6% by weight of 2-octlydodecylstearat. In some embodiments, the composition may include from 0.1% by weight to 0.6% by weight of 2-octlydodecylstearat. As nonlimiting examples, the composition may include no greater than 0.5% by weight, no greater than 0.4% by weight, no greater than 0.3% by weight, no greater than 0.2% by weight, no greater than 0.1% by weight, and/or the like, of 2-octlydodecylstearat. As further nonlimiting examples, the composition may include at least 0.01% by weight, at least 0.05% by weight, at least 0.1% by weight, at least 0.2% by weight, and/or the like, of 2-octlydodecylstearat.

### Flexural Strength

In some embodiments, the composition may retain a portion of its original flexural strength after aging. As used herein, a "flexural strength" is a mechanical parameter describing an ability of a material to resist bending or deformation when a force is applied thereto. In some cases, flexural strength may also be referred to as bending strength, transverse rupture strength, or modulus of rupture. In some embodiments, the flexural strength of the composition may be measured or monitored in a climate-controlled environment, such as without limitation a climate oven. In some embodiments, the flexural strength of the composition may be measured or monitored under an aging condition such as a temperature of 85 °C and a relative humidity (RH) of 85%. In some embodiments, the composition may have a flexural strength loss of no more than 30% of its original flexural strength after 1,000 hours of aging. In some embodiments, the composition may have a flexural strength loss of no more than 25% its original flexural strength after 1,000 hours of aging. In some embodiments, the composition may have a flexural strength loss of no more than 20% of its original flexural strength after 1,000 hours of aging. In some embodiments, the composition may have a flexural strength loss of no more than 15% of its original flexural strength after 1,000 hours of aging. In some embodiments, the composition may have a flexural strength loss of no more than 5% of its original flexural strength after 1,000 hours of aging. In some embodiments, the composition may have a flexural strength loss of no more than 1% of its original flexural strength after 1,000 hours of aging. aging.

### LFT-D, LFT-G, and GMT

In some embodiments, the composition may be prepared using long fiber-reinforced thermoplastic direct molding (LFT-D). As used herein, the term "long fiber reinforced thermoplastic in direct processing" or "LFT-D" may refer to a type of manufacturing technology for synthesis of polymer or composite materials or a product produced using such technology. In a typical LFT-D process, polymer pellets and additives may be fed into a dosing and feeding unit, which is initially programmed to ensure that the materials are fed at a designed ratio. The proportionally dosed feedstock may subsequently be plasticized and mixed in a first twin-screw extruder, where the molten polymer is passed through a film die to form a waterfall-like polymer film. Glass fibers may then be preheated, dispersed, introduced to the top of the polymer film, through a specially designed yarn frame, and merged with the film into a second twin-screw extruder. At the second twin-screw extruder, the glass fibers may be impregnated, cut, and mixed to form a continuous block. A cutting tool located at the front end of the second twin-screw extruder may cut the block to meet the molding area of the product. A conveyor belt may transport the cut block to an appropriate location and send it into a mold for low-temperature molding.

In some embodiments, the composition may be prepared using long fiber-reinforced thermoplastic granulation (LFT-G). As used herein, the term "long fiber reinforced thermoplastic granulation" or "LFT-G" may refer to a type of manufacturing technology for synthesis of polymer or composite materials or a product produced using such technology. An LFT-G process may be used to produce pellets or granules of injection-moldable plastic that contain continuous fiber filaments running the length of the pellet or granule.

In some embodiments, the composition may be prepared as a glass mat thermoplastic (GMT). As used herein, "glass mat thermoplastic" or "GMT" is a lightweight composite material made from glass fiber and thermoplastic resin. In some cases, glass mat thermoplastic may be referred to as glass mat reinforced thermoplastic, glass fiber mat reinforced thermoplastic, or glass fiber mat reinforced thermoplastic composite. A GMT is typically manufactured by impregnating a glass fiber mat with a polymer matrix to form a sheet, then heating and compressing the sheet into a desired shape.

Compared to GMT and LFT-G, which may rely on semi-finished sheets or pellets, LFT-D may be produced directly from polymer masterbatches and glass fibers on a regular and/or continuous basis, thereby eliminating the intermediate process of sheeting or pelletizing. Such features may help reduce costs and make it easier and more practical to select raw materials for a specific product. Polymer pellets may be quickly adjusted and converted to meet product requirements and adverse conditions that occur during production. The fibers used for reinforcement may be varied in terms of formulation content and length according to the mechanical properties required and/or desired. For certain physical properties and/or characteristics, such as without limitation thermal stability, flame retardancy, heat aging resistance, coloring, water absorption resistance, etc., the performance of final products may be improved by directly adding other modification additives, consistent with details described elsewhere in this disclosure. An LFT-D process may result in a customized material formulation that may be further adapted according to the performance requirements of different products.

### Method of Preparing Composition

FIG. 1 depicts an exemplary embodiment of a method 100 for preparing a hydrolytically stable, polycarbonate-containing composition. At step 105, method 100 may include providing a PC polymer, a phosphorus-based flame retardant, and a polycarbodiimide to a first extruder to produce a first extrudate. As used herein, an "extruder" may refer to a machine used to shape materials by forcing them through a die to create a continuous profile. An extruder typically works by applying heat and pressure to raw materials, forming them into specific shapes as they are pushed through a nozzle or mold. The manufacturing process that involves the use of an extruder is accordingly termed extrusion. To perform extrusion, a high temperature is required to keep the polymer mixture under at least a semi-molten state and ensure a smooth flow through the die. Such an extrusion process may require a precise control over temperature and pressure for successful shaping.

At step 110, method 100 may further include feeding the first extrudate and one or more fibers to a second extruder to produce a final extrudate. The second extruder may break the one or more fibers into shorter fibers and mix such shorter fibers into the final extrudate.

At step 115, method 100 may further include forming the final extrudate into a desired dimension or weight.

At step 120, method 100 may further include conveying the final extrudate to a compression molding tool and molding the final extrudate using the compression molding tool. The compression molding tool may be held at a temperature of at least 90 °C and no greater than 110 °C. More specifically, in some embodiments, the compression molding tool may be held at a temperature of at least 95 °C and no greater than 105 °C.

In some embodiments, the composition may be prepared at a temperature of no greater than 310 °C. In some embodiments, the composition may be prepared at a temperature of at least 290 °C and no greater than 310 °C. In some embodiments, the composition may be prepared at a temperature of at least 300 °C and no greater than 310 °C. In some embodiments, the composition may be prepared at a temperature of at least 295 °C and no greater than 305 °C. In some embodiments, the composition may be prepared at a temperature of approximately 300 °C. Such temperature control may reduce the thermal history of the composition and accordingly suppress the formation of inorganic phosphates, consistent with details described elsewhere in this disclosure.

### Use of the Composition

The composition may be used in one or more members selected from a group consisting of household appliances, automobiles, aircraft, construction materials, consumer products, food storage and packaging, medical devices, energy storage devices, home batteries, and sport equipment. In some embodiments, the composition may be used in one or more of household appliances such as without limitation air conditioners, coffee machines, food mixers and processors, microwaves, ovens, washing machines, hair dryers, steam irons, water tanks, and/or the like. In some embodiments, the composition may be used in automobiles and parts thereof, such as without limitation light housing, headlamp bezels, lenses, and/or the like. In some embodiments, the composition may be used in aircraft, such as without limitation as transparent windows. In some embodiments, the composition may be used as a construction material in, for example and without limitation, agricultural houses, industry or public building, facades, security/bullet-proof windows, shelters, skylights, streetlamp covers, and/or the like. In some embodiments, the composition may be used in consumer products, such as without limitation in CDs, DVDs, safety goggles/protective glasses, shatter-proof sunglasses, face shields, ophthalmic lenses, water bottles, and/or the like. In some embodiments, the composition may be used in food storage and packaging, such as without limitation in lunch boxes and beverage containers. In some embodiments, the composition may be used in medical devices, such as without limitation in surgical instruments, drug delivery systems, hemodialysis membranes, blood reservoirs, blood filters, and/or the like. In some embodiments, the composition may be used in energy storage devices such as batteries, capacitors, flow cells, photovoltaics, and/or the like. In some embodiments, the composition may be used in home batteries such as lithium-ion batteries, lead-acid batteries, and/or the like. In some embodiments, the composition may be used in sport equipment, such as without limitation in ski clamp parts, helmets, and/or the like.

In some embodiments, the composition may be used in, without limitation, electric vehicle (EV) battery enclosures and components. For example, the composition may be used in one or more battery pack-related components, such as those used in EVs. As nonlimiting examples, the composition may be used in a top cover that protects the battery cells from external impacts and environmental factors; a bottom plate that provides structural support, which often includes fire-resistant materials; one or more side walls that enclose the sides of a battery pack for additional protection and structural integrity; a cooling plate, which may be integrated into an enclosure to manage the temperature of a battery cell; a sealing gasket, which can be used to ensure that an enclosure is watertight and dustproof; a crash absorption zone designed to absorb energy in the event of a collision and protect a battery cells; an electrical connector used to facilitate the connection of a battery cell to a vehicle's electrical system; thermal insulation used for maintaining an optimal battery temperature; a mounting bracket for securing a battery pack to a vehicle chassis; a ventilation system for the release of gas in case of thermal runaway.

### Articles of Manufacture Using the Composition

In some embodiments, an article of manufacture may be configured to include, incorporate, or contain the hydrolytically stable, polycarbonate-containing composition, consistent with details described above. Additionally, and/or alternatively, the article of manufacture may include any suitable and/or relevant article of manufacture, as recognized by a person of ordinary skill in the art, upon reviewing the entirety of this disclosure.

### Increasing the Flame Retardancy of an Articles

In some embodiments the method for increasing the flame retardancy of an article may include adding to the article the hydrolytically stable, polycarbonate-containing composition, consistent with details described above.

### Additional Applications

Aspects of this disclosure may be used to improve the long-term hydrolytic stability of flame-retardant PC compound and composites. Aspects of this disclosure may be suitable for use in applications or processes such as without limitation PC LFT-D direct compression molding of PC composite, PC LGF or LFT-G pultruded long fiber PC granule for injection molding, PC LFT-filled PC composite extruded sheet, PC glass fabric-based composites (i.e., organosheet laminates based on continuous fibers), PC-based unidirectional pultrusion and/or tape/lamination (i.e., laminates of UD tape), and/or the like.

### EXAMPLES

Sample compositions were prepared as described in Table 1. The polycarbonate polymer was Polycarbonate CALIBRE^{™} 300-23 acquired from Trinseo (King of Prussia, Pennsylvania, USA). The BAPP was REOFOS^{®} BAPP acquired from Lanxess (Pittsburgh, Pennsylvania, USA). The polycarbodiimide was Staboxol^{®} P-100 (poly(2,4,6-triisopropyl-1,3 - phenylene carbodiimide)) acquired from Lanxess (Pittsburgh, Pennsylvania, USA). The mold release agent was LOXIOL^{®} (2-octlydodecylstearat) acquired from Emery Oleochemicals (Cincinnati, Ohio, USA). The glass fibers were StarRov^{®} 853 (glass roving) acquired from Johns Manville (Denver, Colorado, USA).

**Table 1: Compositions CE-1, CE-2, E-1, and E-2**

| | Comparative Example (CE-1) | Comparative Example (CE-2) | Inventive Example (E-1) | Inventive Example (E-2) |
|---|---|---|---|---|
| Polycarbonate Polymer | 61.05 wt% | 59.05 wt% | 60.85 wt% | 60.55 wt% |
| BAPP | 8.75 wt% | 8.75 wt% | 8.75 wt% | 8.75 wt% |
| Polycarbodiimide | 0 wt% | 2 wt% | 0.2 wt% | 0.5 wt% |
| Mold Release Agent | 0.2 wt% | 0.2 wt% | 0.2 wt% | 0.2 wt% |
| Glass Fiber | 30 wt% | 30 wt% | 30 wt% | 30 wt% |

A test plaque was produced for each composition by LFT-D. All components, except the glass fiber, were fed to and mixed in a first twin screw extruder to produce a first extrudate, which flowed into a second extruder (at 300°C). Continuous glass fibers were fed together with the first extrudate into the second extruder to produce a final extrudate (at 300°C). The second extruder broke the glass fibers inro shorter fibers. The final extrudate was collected and cut into desired dimensions and weights and then conveyed by a steel mesh conveyer. The final extrudate was placed into a compression molding tool with a tool temperature between 90-110°C. Test plaques were then produced by compression molding at 200 bar for 1 minute.

The test plaques underwent aging and flexural test according to ISO 178. Results are shown in Table 2.

**Table 2: Flexural Strength of Test Plaques Before and After Aging at 85°C/85%RH for 1000 hours**

| | CE-1 | CE-2 | E-1 | E-2 |
|---|---|---|---|---|
| Flexural Strength at 0 hours (MPa) | 126 | 131 | 125 | 137 |
| Flexural Strength at 1000 hours hydrothermal aging (MPa) | 108 | 112 | 124 | 129 |
| Flexural Strength Loss at 1000 hours (%) | 15 | 14 | 1 | 6 |

The results demonstrate that inventive examples E-1 and E-2 had improved hydrolytic stability, and that the flexural strength loss was mitigated after 1000 hours of aging in a 85°C/85% relative humidity climate chamber.

It should be understood that modifications to the embodiments disclosed herein can be made to meet a particular set of design criteria. For instance, the number of or configuration of components or parameters may be used to meet a particular objective.

It will be apparent to those skilled in the art that numerous modifications and variations of the described examples and embodiments are possible in light of the above teachings of the disclosure. The disclosed examples and embodiments are presented for purposes of illustration only. Other alternative embodiments may include some or all the features of the various embodiments disclosed herein. For instance, it is contemplated that a particular feature described, either individually or as part of an embodiment, can be combined with other individually described features, or parts of other embodiments. The elements and acts of the various embodiments described herein can therefore be combined to provide further embodiments.

It is the intent to cover all such modifications and alternative embodiments as may come within the true scope of this invention, which is to be given the full breadth thereof. Additionally, the disclosure of a range of values is a disclosure of every numerical value within that range, including the end points. Thus, while certain exemplary embodiments of the device and methods of making and using the same have been discussed and illustrated herein, it is to be distinctly understood that the invention is not limited thereto but may be otherwise variously embodied and practiced within the scope of the following claims.

## Claims

1. A composition comprising:
a polycarbonate polymer;
a phosphorus-based flame retardant;
one or more reinforcing fibers; and
0.01-1% by weight of a polycarbodiimide.

2. The composition of claim 1, comprising 0.1- 0.5% by weight of the polycarbodiimide.

3. The composition of claim 1, wherein the polycarbodiimide is selected from the group consisting of poly(cyclooctylene carbodiimide), poly(1,4-dimethylene cyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6', tetra-isopropyl-diphenylene carbodiimide), poly(2,4,6-triisopropyl-1,3 -phenylene carbodiimide), poly(1,3,5-triisopropyl-phenylene-2,4-carbodiimide), poly(2,6 diisopropyl-1,3-phenylene carbodiimide), poly(tolyl carbodiimide), poly(4,4'-diphenylmethane carbodiimide), poly(3,3'-dimethyl-4,4'-biphenylene carbodiimide), poly(p- phenylene carbodiimide), poly(m-phenylene carbodiimide), poly(3,3'-dimethyl-4,4'- diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and mixtures thereof.

4. The composition of claim 1, comprising 15-80% by weight of the polycarbonate polymer.

5. The composition of claim 1, wherein the polycarbonate polymer comprises a recycled polycarbonate.

6. The composition of claim 1, comprising 2-15% by weight of the phosphorus-based flame retardant.

7. The composition of claim 1, wherein the phosphorus-based flame retardant is selected from the group consisting of an oligomeric phosphate, a poly(block-phosphonato-ester), a poly(block-phosphonato-carbonate), a phosphazene, a phenoxyphosphazene, a polyphosphazene, and mixtures thereof.

8. The composition of claim 7, wherein the oligomeric phosphate is selected from the group consisting of bisphenol A bis(diphenyl phosphate), resorcinol bis(2,6-dixylenyl phosphate), 1,3-phenylene tetrakis(2,6-dimethylphenyl) ester, and mixtures thereof.

9. The composition of claim 1, comprising 2-70% by weight of one or more reinforcing fibers.

10. The composition of claim 1, wherein the one or more reinforcing fibers are selected from the group consisting of glass fiber, carbon fiber, steel fiber, aluminum fiber, magnesium fiber, nickel fiber, nickel-coated carbon fiber, nickel-coated basalt fiber, polyacrylonitrile fiber, polyaramid fiber, natural cellulose fiber, mineral fiber, and mixtures thereof.

11. The composition of claim 10, wherein the one or more reinforcing fibers include glass fiber.

12. The composition of claim 1, further comprising no greater than 5% by weight of an impact modifier.

13. The composition of claim 12, wherein the impact modifier is selected from the group consisting of butadiene rubber-based methyl methacrylate styrene, styrene-butadiene rubber-based methyl methacrylate styrene, methyl methacrylate-grafted, siloxane-acrylate rubber, acrylate rubber-based, and mixtures thereof.

14. The composition of claim 12, wherein the impact modifier is a core-shell impact modifier.

15. The composition of claim 1, further comprising no greater than 20% by weight of a second polymer.

16. The composition of claim 15, wherein the second polymer is selected from the group consisting of acrylonitrile butadiene styrene (ABS), styrene acrylonitrile (SAN), and mixtures thereof.

17. The composition of claim 1, further comprising no greater than 0.8% by weight of polytetrafluoroethylene.

18. The composition of claim 1, further comprising no greater than 0.2% by weight of octadecyl 3-(3,5-di-tert-butyl-4-hydroxyphenyl)propionate.

19. The composition of claim 1, further comprising no greater than 0.6% by weight of pentaerythritol and/or 2-octyldodecylstearat.

20. The composition of claim 1, wherein said composition has a flexural strength loss at 1000 hours of aging in an 85°C/85% relative humidity climate chamber of less than 30%.

21. A method of forming the composition of claim 1, the method comprising:
a step of performing at least one of fiber-reinforced thermoplastic direct molding, fiber-reinforced thermoplastic granulation, fiber reinforced sheet extrusion, organosheet lamination, or unidirectional tape pultrusion and lamination.

22. An article of manufacture comprising the composition of claim 1.

23. An electric vehicle (EV) battery enclosure comprising the composition of claim 1.
